# EUROPEAN PATENT APPLICATION

(11) **EP 1 734 481 A1**
(43) Date of publication of application: **20.12.2006**
(21) Application number: 04821888.7
(22) Date of filing: 18.11.2004
(51) Int. Cl.: G06T 15/70, G06T 15/00, A63F 13/00

(54) **GAME PROGRAM AND GAME DEVICE HAVING A LARGE-SURFACE OBJECT DISPLAY FUNCTION**

(30) Priority: 31.03.2004 JP 2004106044
(71) Applicant: Konami Corporation, Chiyoda-ku, Tokyo 100-6330 (JP)
(72) Inventor: OKAJIMA, Shigeo, c/o Konami Corporation, Tokyo 106-6112 (JP)
(74) Representative: Hengelhaupt, Jürgen
(86) International application number: PCT/JP2004/017152
(87) International publication number: WO 2005/101325

(57) **Abstract**

Game software for getting a computer to execute a procedure for computing and producing a mesh 29 being comprised of a plurality of small partitions 29a on a projecting plane 25c of a virtual camera, a procedure for projecting the mesh produced on the projecting plane onto a position of the surface 22a of a big surface obj ect in a three dimensional virtual space, the position being shown by object data, so as to set a projecting mesh 29A, a procedure for partially modeling the surface of the big surface object on each of small partitions comprising the projecting mesh, a procedure for rendering the surface of the big surface object partially modeled so as to compute and produce an image 22b of the surface on the projecting plane, and a procedure for displaying the image 22b of the surface computed and produced on a monitor 9.

## Description

### TECHNICAL FIELD

This invention relates to game software and a game machine, for realtimely modeling and rendering a three dimensional object. Especially, the invention relates to game software and a game machine, suitable for representing a three dimensional object having a big surface, such as a sea, a lake, a river, a desert and a jungle.

### BACKGROUND ART

"Game software" in the specification includes program itself and various kinds of data related to the program if necessary. It is not always necessary to relate "game software" to the data, but "game software" has always program. And, "the related various kinds of data" may be stored in a memory means, such as a ROM disc, together with the program. Furthermore, these data may be stored in an outside memory means so as to be freely read out through a communication medium means, such as the Internet.

In a conventional method of representing an image of a three dimensional object having a big surface, such as a sea, a lake, a river, a desert and a jungle (only "the big surface object" hereinafter) with such kind of game software, the whole model of a three dimensional object to be represented is located at a predetermined position inside a three dimensional virtual space, the whole model located is equally divided into many small meshes, a polygon is located on each mesh, animation processing for changing the shape of each mesh (polygon) with passage of time is executed, and rendering processing, such as texture mapping, shadowing and shading, is executed on the polygon so as to produce the image to be produced.

In such a case, animation processing and rendering processing on each mesh (polygon) are executed on the polygon located on each mesh, so that animation processing and rendering processing are executed on a distant surface of water, similar on a surface of water near a camera although the distant surface of water is actually displayed to be extremely small on a monitor.

With this method, a vain operation by a CPU is inevitable. So, this is a big problem for game software and a game machine with real-time computer graphics (CG) animation for actualizing speedy picturing by improving efficiency of operation of a CPU if circumstances allow.

The object of the present invention is to provide game software and a game machine for maintaining quality of images which are displayed on a display and actualizing speedy picturing with no vain operation by a CPU when representing the big surface object with real-time CG animation processing, taking the above-mentioned circumstances into consideration.

### DISCLOSURE OF INVENTION

The invention is game software (GPR) having function of displaying big surface object, said game software having program for getting a computer (16) to execute a procedure for obtaining an image of a surface of a big surface object (21, 22) having a big surface to be located in a three dimensional virtual space (31) with a virtual camera (23) and displaying on a monitor (9), comprising:
said game software having program for getting said computer to execute the following procedures,
a procedure for storing data, for storing object data (OBD) in a memory of said computer, said object data (OBD) having a coordinate position of said surface (22a) of saidbig surface object for locating said surface in said three dimensional virtual space;
a procedure for setting virtual camera (CCP), for setting said virtual camera in said three dimensional virtual space such that a lower face (25e) of a view boundary (25) of said virtual camera intersects a plane (22a) where said surface of said big surface object is located;
a procedure for producing mesh (BOD), for computing so as to produce a mesh (29) being comprised of a plurality of small partitions (29a) on a projecting plane (25c) of said virtual camera;
a procedure for setting projecting mesh (BOD), for setting a projecting mesh (29A) by projecting said mesh produced on said projecting plane by said procedure for producing mesh onto a position of said surface (22a) of saidbig surface object in said three dimensional virtual space, said position being shown by said object data;
a procedure for partially modeling (BOD), for partially modeling said surface of said big surface object on each small partition comprising said projecting mesh;
a procedure for rendering (CCP), for rendering said surface of said big surface object which was partially modeled by said procedure for partially modeling so as to compute and produce an image (22b) of said surface on said projecting plane; and
a procedure for displaying (CCP), for displaying said image (22b) of said surface which was computed and produced by said procedure for rendering on said monitor (9).

According to this aspect of the invention, it is not necessary to divide all the surfaces (22a) of the big surface object (21, 22) by a mesh, and it is sufficient to set the mesh on only surface (22a) portion which is projected on the projecting plane (25c) of the virtual camera (23) and to model only the surface (22a), thereby avoiding modeling on the other surface portion (22a) of the big surface object (21, 22) which is not displayed on a monitor (9) as an image. Then, the burden on a CPU (1) does not widely increase by the operation for modeling, and speedy picturing is possible, while maintaining quality of image similar to the conventional.

And, the mesh (29) is set on the projecting plane (25c) of the virtual camera (23), and the set mesh (29) is projected onto a position of the surface (22a) of the big surface object so as to set the projecting mesh (29A), so that the small partition (29b) of the projectingmesh (29A) projected can be changed bigger with distance from the virtual camera (23). Then, the distant mesh (29b) which is projected on the big surface object (21, 22) occupies a big surface area on the surface (22a), and the modeling on each small partition (29b) of the mesh (29b) and the subsequent rendering processing can be made more simple with the area ratio with respect to the object with distance from the virtual camera.

Then, speedy picturing is possible with a quality of image similar to the conventional, while widely simplifying the processing of the portion distant from the virtual camera (23), which will be small displayed on a monitor (9) in actual fact and does not mostly give an influence on the quality of the image even if displayed.

Besides, the other aspect of the invention is the game software having function of displaying big surface object, wherein said procedure for producing mesh has a procedure for computing position of surface (BOD), for computing a coordinate position (v coordinate) on said projecting plane, concerning the most distant position of said surface (CP) of said big surface object which is projected on said projecting plane (25c) from a position of said virtual cameral (23) with respect to said big surface object (21, 22), and said mesh (29a) is computed and produced on a portion near said virtual camera rather than said coordinate position on said projecting plane which was computed by said procedure for computing position of surface.

In this case, the mesh is computed and produced on the portion near the virtual camera (26) rather than the coordinate position on the projecting plane which was computed by the procedure for computing position of surface, so that the mesh (29) is not set on the portion excluding the surface (22a) of the big surface object (21, 22), thereby avoiding excessive operation by a CPU (1) and actualizing speedy processing.

Beside, the other aspect of the invention is the game software having function of displaying big surface object, wherein said procedure for producing mesh has a procedure for equally dividing, for respectively equally dividing said projecting plane (25c) of said virtual camera in horizontal and vertical directions so as to produce said mesh.

In this case, the mesh is produced by respectively equally dividing the projecting plane (25c) of the virtual camera in horizontal and vertical directions, so that production of mesh is made simple, and the operation load on a CPU (1) is small.
And, the other aspect of the invention is the game software having function of displaying big surface object, wherein said procedure for producing mesh has a procedure for dividing mesh, for dividing said projecting plane (25c) of said virtual camera so as to produce said mesh (29) such that the farther the distance from said virtual camera is, the bigger said small partition (29b) of said projecting mesh (29A) which is set by said procedure for setting projecting mesh becomes.

In this case, the mesh (29) is produced by dividing the projecting plane (25c) of the virtual camera such that the small partition (29b) of the projecting mesh (29A) which is set by the procedure for setting projecting mesh can be changed bigger with distance from the virtual camera. Then, the distant mesh (29b) of the big surface object (21, 22) which does not mostly give an influence on the quality of image displayed on the monitor (9) occupies a big surface area on the surface (22a) of the object. Then, the modeling on each small partition (29b) and the subsequent rendering processing can be made more simple with the area ratio with respect to the object with distance from the virtual camera.

Then, speedy picturing is possible with a quality of image similar to the conventional, while widely simplifying the processing of the portion distant from the virtual camera (23), which will be small displayed on a monitor (9) in actual fact and does not mostly give an influence on the quality of the image even if displayed.

And, the other aspect of the invention is the game software having function of displaying big surface object, wherein said procedure for partially modeling has a procedure for locating polygon, for locating a plate polygon (30) on each of said small partitions (29b) comprising said projecting mesh (29A).

In this case, a plate polygon (30) is located on each of the small partitions (29b) comprising the projecting mesh (29A), thereby easily executing the modeling, corresponding the small partition (29b) of the projecting mesh (29A) and the plate polygon (30) to each other with 1:1.

Besides, the other aspect of the invention is the game software having function of displaying big surface object, wherein said big surface object (21, 22) is an object (22) for representing a sea, a lake or a river.

In this case, the big surface object (21, 22) is the object (22) for representing a sea, a lake or a river, and the surface of the big surface object (21) is a surface of water having a relatively simple surface shape. Then, simple rendering procedure on the plate polygon (30) distant from the virtual camera (31) concerning the surface of water (22a) having a big area does not invite deterioration of the quality of the image, thereby effectively utilizing the invention.

Besides, the other aspect of the invention is a game machine to be controlled by a computer, for executing game software having the above-mentioned program.

In this case, speedy picturing is possible if necessary when the game software being stored in a hard disc or the ROM 2 or the RAM 3 inside a game machine.

The number in parentheses shows the corresponding element in the drawings for the sake of convenience, accordingly, the present descriptions are not restricted and bound by the descriptions on the drawings. And, this invention should not be construed by reference numbers.

### BRIEF DESCRIPTION OF DRAWINGS

[Fig.1] Fig.1 is a control block diagram of a game machine to which the invention is applied.
[Fig. 2] Fig.2 is a typical view showing a lake (a big surface object) located in a three dimensional virtual space and a virtual camera located for rendering a scene of the lake.
[Fig. 3] Fig. 3 is a typical view showing a positional relation between a view boundary of the virtual camera of Fig.2 and a surface of water of the lake.
[Fig.4] Fig.4 is a top view of Fig.3.
[Fig.5] Fig.5 is a typical view showing a mesh set on a projecting plane of camera coordinates.
[Fig.6] Fig.6 is a view showing an image of the surface of water displayed on a display.
[Fig.7] Fig.7 is a flowchart showing summary of procedures for the big surface object.

### EXPLANATION OF REFERENCE NUMBERS

- 1: CPU
- 9: monitor
- 16: computer (main body)
- 20: game machine
- 21: big surface object
- 22: big surface object (lake)
- 22a: surface (surface of water)
- 22b: image
- 23: virtual camera
- 25: view boundary
- 25c: projecting plane
- 25e: lower surface
- 26: camera coordinate system
- 29: mesh
- 29A: projecting mesh
- 29a,: 29b small partition
- 30: plate polygon
- 31: three-dimensional virtual space
- CP: position of surface
- BOD: procedure for producing mesh, procedure for setting projecting mesh, procedure for partially modeling, procedure for computing position of surface (big surface object processing program)
- CCP: procedure for setting virtual camera, procedure for rendering, procedure for displaying (camera control program)
- GPR: game software

### BEST MODE FOR CARRYING OUT THE INVENTION

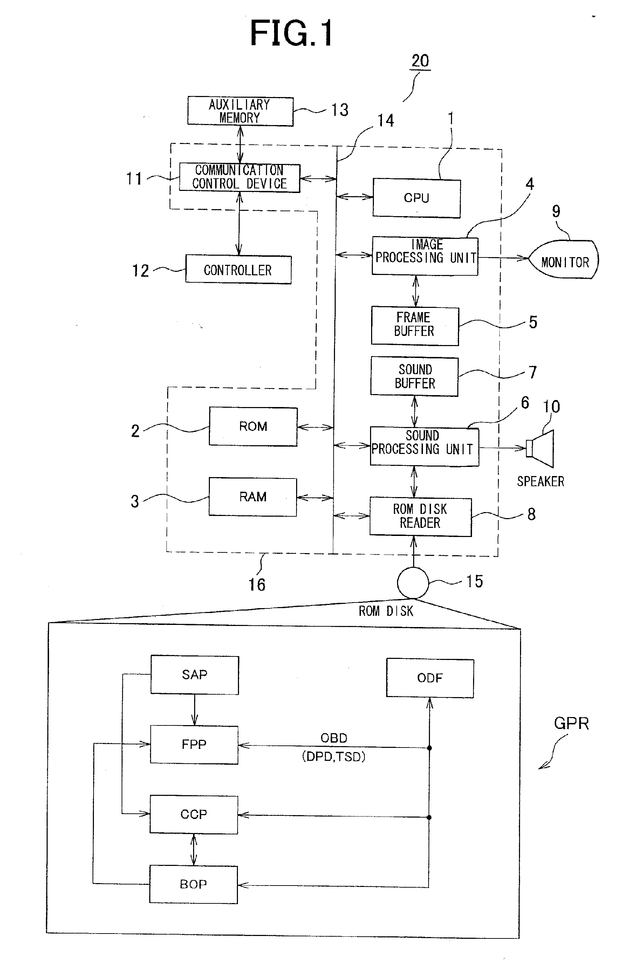

A game machine 20 is for executing a predetermined game, such as an action game, according to game software which is stored in a ROM disc 15, a storage medium, as shown in Fig.1. The game machine 20 has a CPU 1, main body of which is a microprocessor, a ROM (read-only memory) 2 and a RAM (random-access memory) 3 as main memories with respect to the CPU 1, an image processing unit 4 and a sound processing unit 6, and buffers 5, 7 with respect to both units, and a ROM disc reader 8.

An operating system which is program necessary for controlling the whole operations in the game machine is written in the ROM 2. In the RAM 3, program and data for game read from the ROM disc 15 as a storage medium are stored according to its necessity. And, the image processing unit 4 receives image data from the CPU 1, and draws a game picture on the frame buffer 5, and converts the data of the drawn image into predetermined video regenerative signal, and outputs the signal to a monitor 9 with a predetermined timing. The sound processing unit 6 copies data of voice or sound, and data of the sound source which are read out of the ROM disc 15 and stored in the sound buffer 7, and gets a speaker 10 to output. The ROM disc reader 8 reads program and data which are stored in the ROM disc 15 according to an instruction from the CPU 1, and outputs a signal corresponding to the read contents. Program and data necessary for execution of the game are stored in the ROM disc 15. As the monitor 9 and the speaker 10, a home television receiver and a built-in speaker of the television receiver are generally used.

A communication control device 11 is connected with the CPU 1 through a bus 14, and a controller 12 as an input device and an auxiliary memory 13 are attachably and detachably connected with the device 11 through proper connection ports. The controller 12 functions as an input device, and has operation members, such as an operation key, for receiving the operation by a player. The communication control device 11 scans the state of the operation of the controller 12 at predetermined cycles (at sixty cycles per a second, for instance), and outputs the signal corresponding to the scanned result to the CPU 1. The CPU 1 judges the state of the operation of the controller 12 on the basis of the signal. A plurality of the controllers 12 and the auxiliary memories 13 may be connected with the communication control device 11 in parallel.

The components in the above-mentioned structure excluding the monitor 9, the speaker 10, the controller 12, the ROM disc 15, and the auxiliary memory 13 are stored together in a predetermined housing so as to comprise a machine body 16. This machine body 16 functions as a computer.

Game software GPR through which a game, such as an action game, a role playing game, and an adventure game, proceeds according to a predetermined scenario, is stored in the ROM disc 15.

In the game machine 20, the CPU 1 firstly executes a predetermined initialization process according to the program of the ROM 2 after a predetermined initialization operation (the operation of turning the power on, for instance). When the initialization finishes, the CPU 1 starts to read the game software GPR which is stored in the ROM disc 15, and starts game processing according to the program. When a player executes a predetermined game start operation on the controller 12, the CPU 1 starts various processing necessary for the execution of the game according to the routines of the game software GPR on the basis of the instruction.

Thereafter, the game machine 20 executes predetermined processes according to the read game software GPR, controls to display the image on the monitor 9, and controls so that a predetermined scenario can proceed.

With the game machine 20 having such a structure, various kinds of games can be played on a screen of the display 9 by loading the program stored in the ROM disc 15 into the RAM 3 which is a main memory of a computer and executing the loaded with the CPU 1.

In the above-mentioned explanation, a computer through which the game software according to the invention functions is the game machine 20 as a game machine for home use. But, the game machine 20 may be a so-called portable game machine. Besides, the game machine 20 may not be a machine dedicated for a game, but a machine for replaying storage medium of general sound or general image.

Alternatively, the computer may be anything for working the game software, such as a personal computer and a portable phone.

And, various kinds of programs comprising the game software GPR and various kinds of data may be stored in with any method as long as these can be read out through a function of the program of the game software GPR. As the embodiment of the invention, these may be stored in the ROM disc 15 together with the program of the game software GPR. Alternatively, these may be stored in an external memory means separate from the game machine 1, such as a server, so as to download in a memory, such as the RAM 3, through a communication medium means, such as the Internet, with a reading program provided in the game software GPR.

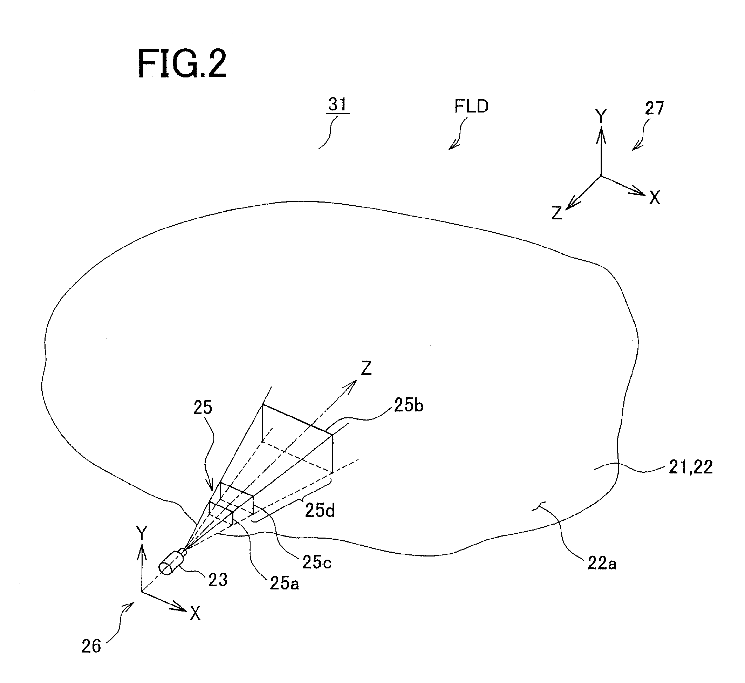

The game according to the game software GPR is a so-called action game for moving a character (not shown) operable by a player's instruction through the controller 12, fighting against an enemy character in a field FLD set inside a three dimensional virtual space 31, the space being produced inside the RAM 3 by the CPU 1 as shown in Fig.2 according to a field producing program FPP of the game software GPR so as to advance a scenario.

Only elements of the software in conjunction with the invention which comprise the game software GPR are shown in the game software GPR as shown in Fig.1, and various kinds of programs and data including ones shown in Fig.1 which are necessary for executing the game with the game software GPR are actually stored in the game software GPR.

The field producing program FPP may locate a big surface object 21, an object, such as a lake, a sea, a desert, a jungle and a river, having a big surface, such as a surface of lake, a surface of sea, a surface of sand, an upper surface of jungle, a surface of river, inside the three dimensional virtual space 31 through the CPU 1 by instruction of a scenario progress control program SAP for controlling a progress of the game scenario, as shown in Fig.2. In a case of this embodiment, a lake 22 is located in the three dimensional virtual space 31 as the big surface object 21.

And, the scenario progress control program SAP instructs a camera control program CCP of the game software GPR to display an image obtained by rendering the lake 22 on the monitor 9 through the CPU 1 and the image processing unit 4 according to a movement of the character in the game (not shown).

Receiving this instruction, the camera control program CCP reads a big surface object processing program BOP out of the game software GPR through the CPU 1, and processes to display a surface of water 22a which is a surface of lake according to the big surface object processing program BOP.

No lake 22 is located in the three dimensional virtual space 31 as an object before processing to display the lake 22 by the big surface object processing program BOP. Then, the big surface object processing program BOP instructs the field producing program FPP to read object data OBD concerning the lake 22 which was instructed to display by the camera control program CCP out of an object data file ODF in the game software GPR through the CPU 1.

Receiving this instruction, the CPU 1 reads the object data OBD concerning the lake 22 to be located in the three dimensional virtual space 31 out of the object data file ODF, and stores in the buffer memory (not shown) (step S1 of Fig.1). The object data OBD of the lake 22 stores data necessary for locating the lake 22 in the three dimensional virtual space 31, such as positional data DPD concerning a position of the lake 22 in the three dimensional virtual space 31, and three dimensional shape data TSD including a shape of the lake 22 and a shape and a depth of the surface of water 22a. The field producing program FPP can easily produce the lake 22 and locate it at a predetermined position in the three dimensional virtual space 31 on the basis of the object data OBD of the lake 22 which was read out of the object data file ODF through the CPU 1.

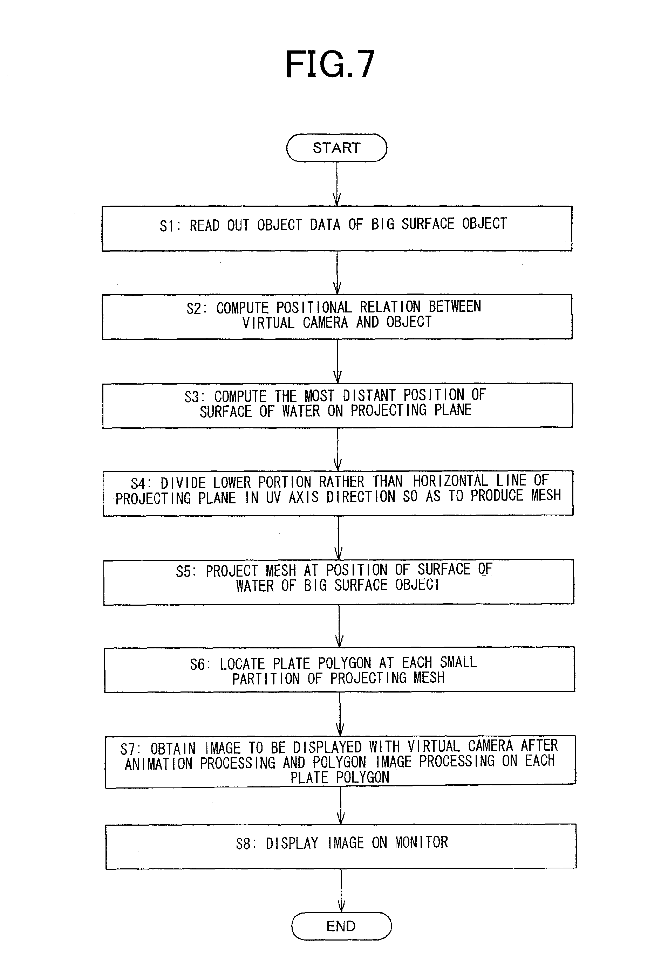

After reading out the object data OBD of the lake 22 to be displayed, the big surface object processing program BOP obtains a present position of a virtual camera (view point) 23 for projecting the object of the lake 22 from the camera control program CCP, and computes a positional relation between the camera 23 and the lake 22 to be located in the three dimensional virtual space 31 through the CPU 1 (step S2 of Fig.7).

The virtual camera 23 is located through the camera control program CCP, facing a Z-axis of a camera coordinate system 26 to the surface of water 22a of the lake 22, that is, crossing the Z-axis and a plane where the surface of water 22a is located in the three dimensional virtual space 31, as shown in Figs.2 through 4, and the camera control program CCP sets a view boundary 25 in the shape of a quadrangular pyramid having a vertical visual angle α and a horizontal visual angle β, showing a physical bounds of the three dimensional virtual space 31 which can be caught by the virtual camera 23 on the object of the lake 22, concretely speaking, on the object showing the surface of water 22a.

This view boundary 25 sets the view bounds in the camera coordinate system 26 in horizontal and vertical directions, and a front clipping plane 25a and a rear clipping plane 25b which show the bounds for projecting the object in the three dimensional virtual space 31 are set in the view boundary 25. And, a projecting plane (view screen) 25c is set between the front and rear clipping planes 25a, 25b. And, view volume 25d between the front and rear clipping planes 25a, 25b of the view boundary 25 is bounds where the object 21 in the three dimensional virtual space 31 is projected onto the projecting plane 25c.

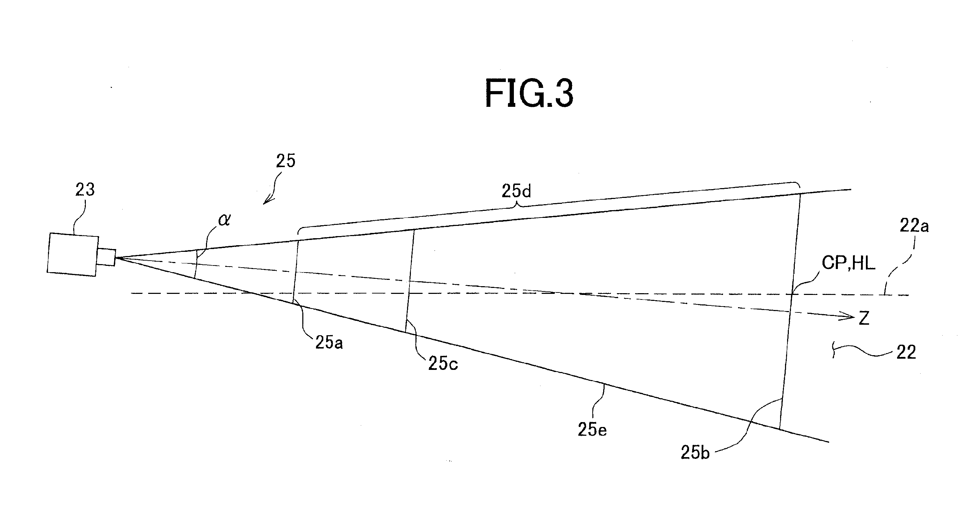

The big surface object processing program BOP computes a position of the furthest surface of water 22a (horizontal line HL) in the object of the lake 22 which is projected onto the projecting plane 25c from the position of the virtual camera 23 with respect to the object of the lake 22 as a coordinate position on the projecting plane, as shown in Fig.3 (step S3 of Fig.7). The position can be easily computed from the object data OBD of the lake 22, the positions of the virtual camera 23 and the projecting plane 25c and the shape data of the view volume 25d.

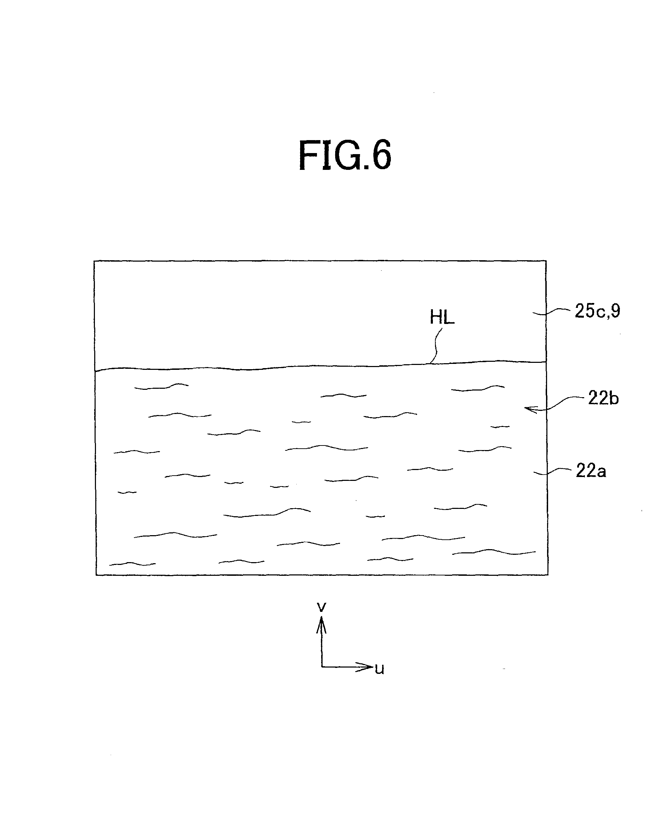

For instance, a v coordinate position on uv coordinates of the position of the farthest surface of water in Fig. 6 of the surface of water 22a of the lake 22 projected on the projecting plane 25c, that is, a line of intersection CP between the rear clipping plane 25b and the surface of water 22a in Fig.3 ("the horizontal line HL" hereinafter) projected on the projecting plane 25c, is obtained from the object data OBD of the lake 22 (step S3 of Fig. 7).

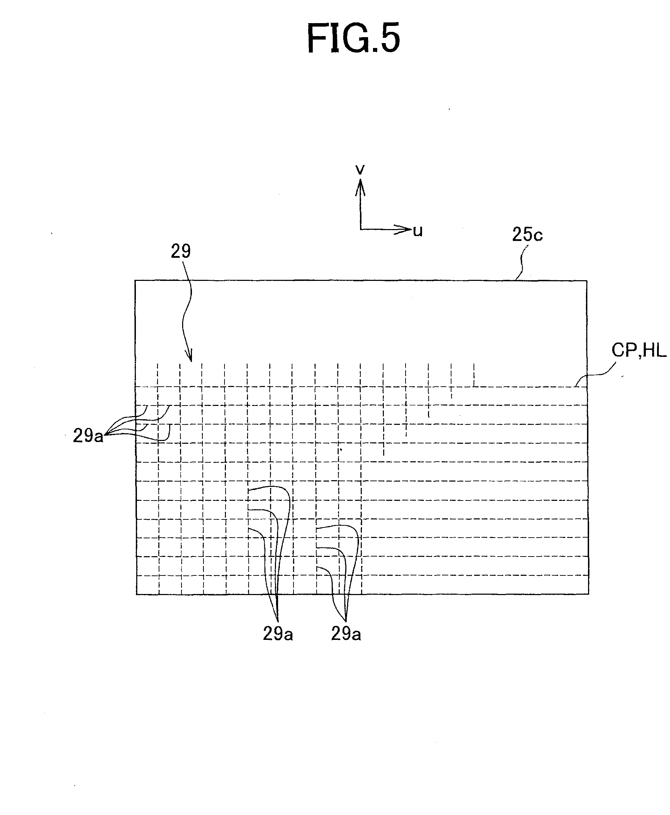

A X-axis of the camera coordinates 26 of the virtual camera 23 is set parallel to a X-axis of the world coordinates 27 of the three dimensional virtual space 31, as shown in Fig. 2, so that the line of intersection CP of the surface of water 22a of the lake 22 is generally horizontally set in the u-axis direction, having a predetermined V coordinate in the projecting plane 25c as the horizontal line HL, as shown in Fig. 5.

After setting the horizontal line HL on the projecting plane 25c, the big surface object processing program BOP sets and computes a mesh 29 as shown in Fig.5 by respectively equally dividing the portion below the horizontal line HL, where the surface of water 22a is located, in the projecting plane 25c, that is, the portion near the virtual camera 23, in the u-axis direction (horizontal direction) and in the v-axis direction (vertical direction (step S4 of Fig. 7). It is not always necessary to equally divide the portion, but the portion may be divided so that a small partition 29a of the mesh 29 near the virtual camera 23, that is, one in the lower hand of the projecting plane 25c of Fig.5 is finer than one distant from the virtual camera 23, that is, one in the upper hand of the projecting plane 25c.

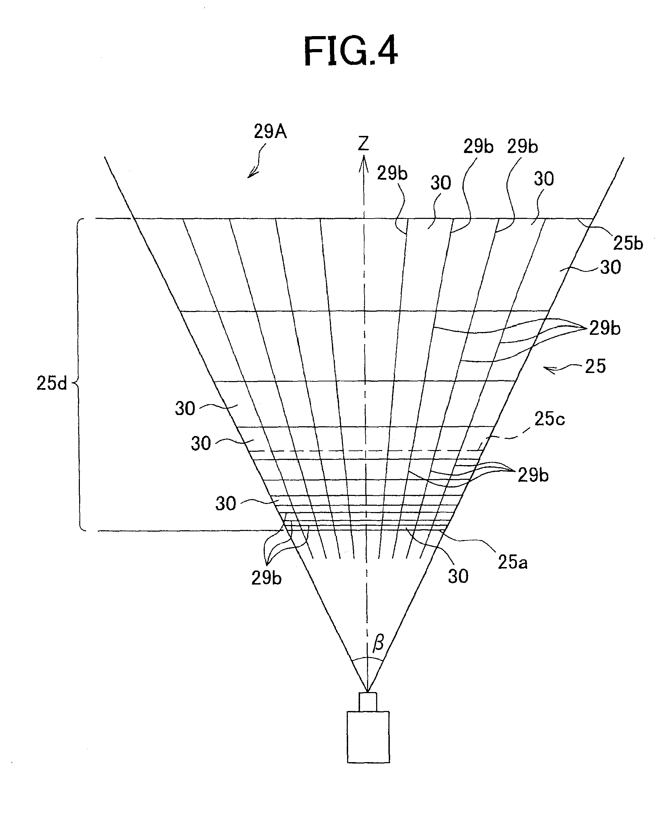

The big surface object processing program BOP projects the mesh 29 thus obtained onto the coordinate position where the surface of water 22a of the big surface object 21 is located in the view boundary 25 as shown in Fig.4 through the CPU 1 so as to compute and produce a projectingmesh 29A. Then, the projecting mesh 29A produced by projecting the mesh 29 is produced such that a small partition 29b of the projecting mesh 29A changes bigger with distance from the virtual camera 23 since the mesh 29 equally produced on the projecting plane 25c is set, crossing the view boundary 25 in the shape of a quadrangular pyramid of the virtual camera 23 and the surface of water 22a with each other.

It is not always necessary to cross the Z-axis of the camera coordinate system 26 and the surface of water 22a with each other, but it is necessary to cross a lower surface 25e of the view boundary 25 in the shape of a quadrangular pyramid of the virtual camera 23 and the surface of water 22a (correctly speaking, the plane in the three dimensional virtual space 31 where the surface of water 22a is set) in order to project the surface of water 22a on the projecting plane 25c.

The projecting mesh 29A is conversely projected at the plane position on the world coordinates 27 where the surface of water 22a is to be located in the three dimensional virtual space 31 on the basis of the mesh 29 produced on the projecting plane 25c of the virtual camera 23 where the surface of water 22a is projected, so that the projecting mesh 29A is properly set in the bounds of the view volume 25d inside the bounds having a horizontal view angle β as shown in Fig.4, that is, in the bounds of the three dimensional virtual space 31 displayed on the display 9.

Subsequently, the big surface object processing program BOP locates a plate polygon 30 on each small partition 29b of the projecting mesh 29A projected on the position of the surface of water 22a of the lake 22 of the three dimensional virtual space 31 so as to correspond both sizes of the plate polygon 30 and the small partition 29b to each other, and the portion of the surface of water 22a which is positioned in the view volume 25d of the virtual camera 23 is modeled with the plate polygons. At this time, no plate polygon 30 is located on the portion of the surface of water 22a excluding the view volume 25d. With a conventional method, many polygons are located on all of the surface of water 22a of the big surface object 21, irrespective of the bounds of the view volume 25d. In comparison with the conventional method, the partial modeling of the surface of water 22a can make operating time for processing of location of the plate polygons 30 widely short.

After thus locating the plate polygon 30 on each of the small partitions 29b of the projection mesh 29A, the big surface object processing program BOP implements animation processing and rendering processing on each located plate polygon 30 so as to obtain an image 22b of the surface of water 22a of the lake 22 on the projecting plane 25c of the virtual camera 23.

That is, animation processing suitable for real-time computer graphics (such as a processing for transforming each plate polygon 30 with passage of time) and polygon image processing, such as texturemapping, shadowing, shading, reflection and no clear picture, are implemented on each plate polygon 30, and projecting processing for perspectively transforming each plate polygon 30 of the projecting mesh 29 onto the projecting plane 25c is implemented with the virtual camera 23 through the camera control program CCP and the CPU 1 so as to compute and produce the image 22b of the surface of water 22a of the lake 22 as shown in Fig. 6. The above-mentioned rendering processing includes the polygon image processing and the perspective transformation processing onto the projecting plane 25c.

At this time, the big surface object processing program BOP implements animation processing and polygon image processing only on the plate polygons located in the bounds of the view volume 25d of the virtual camera 23, thereby widely decreasing the operation load on the CPU 1.

As shown in Fig.4, the size of each plate polygon 30 on which polygon image processing is implemented changes bigger with distance from the virtual camera 23, and occupies a big surface area in the surface of water 22a of the lake 22. But, in the image 22b actually displayed on the monitor 9, more reduced plate polygon 30 is projected onto the projecting plane 25c with distance from the virtual camera 23, that is, with increase of the Z coordinate value of the camera coordinates since the small partitions 29a of the mesh 29 corresponding to respective plate polygons 30 are equally set in their sizes as shown in Fig.5.

In other words, the bigger the Z coordinate value of the plate polygon 30 is, the bigger the reduction rate of each plate polygon 30 to the projecting plane 25c is. Even if the plate polygon 30 the Z coordinate value of which is big (the small partition 29b of the projecting mesh 29A projected) is bigger than the plate polygon 30 the Z coordinate value of which is small (the small partition 29b of the projecting mesh 29A projected) as shown in Fig.4, the influence of the polygon image processing on such a big plate polygon 30 is small by the big reduction rate to the projecting plane 25c. In other words, even if the image processing on the big plate polygon 30 distant from the virtual camera 23, that is, on the plate polygon 30 occupying big surface area in the surface of water 22a of the lake 22 is widely simplified per unit area of the surface of water 22a of the lake in comparison with the polygon image processing on the small plate polygon 30 near the virtual camera 23, the influence can be made small, to the extent that one can neglect, on the projecting plane 25c.

The surface of water 22a near the virtual camera 23 is modeled with many small plate polygons 30, and fine animation processing and fine polygon image processing are possible in comparison with the distant surface of water 22a. In other words, high-grade animation processing and high grade polygon image processing, degree of which are high per a unit surface area of the object, are implemented only on the plate polygons 30 near the virtual camera 23 so as to represent the real surface of water 22a, and simple animation processing and simple polygon image processing, degree of which are low per a unit area of the object, are only implemented on the distant plate polygons 30.

Even if similar polygon image processing is thus implemented on both near and distant plate polygons 30 with the unit of each plate polygon 30, the number of the plate polygons 30 to be processed comprising the distant surface of water 22a can be widely decreased in comparison with ones comprising the near surface of water 22a since the polygons comprising the distant surface of water 22a are bigger than ones comprising the near surface of water 22a, thereby implementing the animation processing and the polygon image processing on the plate polygons 30 the distant surface of water 22a with no big burden on the CPU 1.

As mentioned before, no plate polygon 30 is located outside the view volume 25d of the virtual camera 23 and the surface of water 22a is not modeled, so that no animation processing and no polygon image processing is implemented.

When thus obtaining the image 22b of the surface of water 22a of the lake 22 from the virtual camera 23 as shown in Fig.6 by implementing the animation processing and the polygon image processing on each plate polygon 30 which was located and set on the small partition 29b of the projecting mesh 29A according to the big surface object processing program BOP through the CPU 1, and perspectively transforming these on the projecting plane 25c according to the camera control program CCP through the CPU 1, the camera control program CCP displays the image 22b projected on the projecting plane 25c on the monitor 9 through the CPU 1 and the image processing unit 4 (step S8 of Fig.7).

The image 22b is displayed on the monitor 9 so that near surface of water 22a of the lake 22 is detailedly drawn with fine plate polygons 30 and the distant surface of water 22a is simply drawn with the big plate polygons 30 so as not be unnatural.

In the above-mentioned embodiment, the big surface object 21 is the lake 22, and the image 22b of the surface of water 22b thereof is computed and produced. But, the big surface object 21 is not limited to the lake 22, but is any object, such as a sea, a jungle, a river, a desert as long as the obj ect has a relatively simple and big surface, such as a surface of sea, many plants, a surface of river and a surface of sand.

Besides, the X-axis of the camera coordinates 26 of the virtual camera 23 is parallel to the X-Z plane (horizontal plane) of the world coordinates in the above-mentioned embodiment. But, the X-axis of the virtual camera 23 is not always parallel to the X-Z plane of the world coordinates, but may be inclined thereto. That is, it is sufficient that the X-axis of the virtual camera 23 is maintained parallel to the X-Z plane of the world coordinates 27 when setting the mesh 29 as shown in the figure on the projecting plane 25c and projecting the projecting mesh 29A on the coordinate position where the surface of the big surface object 21 is located. When obtaining the image 22b with the virtual camera 23, each polygon 30 located on the small partition 29b of the projecting mesh 29A, on which polygon image processing has already finished, may be perspectively transformed onto the projecting plane 25c in such a state that the X-axis of the virtual camera 23 is inclined to the X-Z plane of the world coordinates 27 so as to obtain and produce the image 22b.

In the above-mentioned embodiment, the CPU 1 comprises a game control unit, and the combination of the CPU 1 and specific software comprises various kinds of means of the game control unit, but at least a part of these means may be replaced by a logical circuit. Besides, the invention may be comprised as variously scaled game systems in addition to as a game system for home use.

### INDUSTRIAL APPLICABILITY

The invention can be applied to an electronic game equipment utilizing a computer and recreational software to be executed through a computer.

## Claims

1. Game software having function of displaying big surface object, said game software having program for getting a computer to execute a procedure for obtaining an image of a surface of a big surface object having a big surface to be located in a three dimensional virtual space with a virtual camera and displaying on a monitor, comprising:
said game software having program for getting said computer to execute the following procedures,
a procedure for storing data, for storing object data in a memory of said computer, said object data having a coordinate position of said surface of said big surface object for locating said surface in said three dimensional virtual space;
a procedure for setting virtual camera, for setting said virtual camera in said three dimensional virtual space such that a lower face of a view boundary of said virtual camera intersects a plane where said surface of said big surface object is located;
a procedure for producing mesh, for computing so as to produce a mesh being comprised of a plurality of small partitions on a projecting plane of said virtual camera;
a procedure for setting projecting mesh, for setting a projecting mesh by projecting said mesh produced on said projecting plane by said procedure for producing mesh onto a position of said surface of said big surface object in said three dimensional virtual space, said position being shown by said object data;
a procedure for partially modeling, for partially modeling said surface of said big surface object on each small partition comprising said projecting mesh;
a procedure for rendering, for rendering said surface of said big surface object which was partially modeled by said procedure for partially modeling so as to compute and produce an image of said surface on said projecting plane; and
a procedure for displaying, for displaying said image of said surface which was computed and produced by said procedure for rendering on said monitor.

2. The game software having function of displaying big surface object according to claim 1, wherein said procedure for producing mesh has a procedure for computing position of surface, for computing a coordinate position on said projecting plane, concerning the most distant position of said surface of said big surface object which is projected on said projecting plane from a position of said virtual cameral with respect to said big surface object, and said mesh is computed and produced on a portion near said virtual camera rather than said coordinate position on said projecting plane which was computed by said procedure for computing position of surface.

3. The game software having function of displaying big surface object according to claim 1, wherein said procedure for producing mesh has a procedure for equally dividing, for respectively equally dividing said projecting plane of said virtual camera in horizontal and vertical directions so as to produce said mesh.

4. The game software having function of displaying big surface object according to claim 1, wherein said procedure for producing mesh has a procedure for dividing mesh, for dividing said projecting plane of said virtual camera so as to produce said mesh such that the farther the distance from said virtual camera is, the bigger said small partition of said projecting mesh which is set by said procedure for setting projecting mesh becomes.

5. The game software having function of displaying big surface object according to claim 1, wherein said procedure for partially modeling has a procedure for locating polygon, for locating a plate polygon on each of said small partitions comprising said projecting mesh.

6. The game software having function of displaying big surface object according to claim 1, wherein said big surface object is an object for representing a sea, a lake or a river.

7. Game machine for obtaining an image of a surface of a big surface object having a big surface to be located in a three dimensional virtual space with a virtual camera and displaying on a monitor, comprising:
means for storing data, for storing object data in a memory of said game machine, said object data having a coordinate position of said surface of said big surface object for locating said surface in said three dimensional virtual space;
means for setting virtual camera, for setting said virtual camera in said three dimensional virtual space such that a lower face of a view boundary of said virtual camera intersects a plane where said surface of said big surface object is located;
means for producing mesh, for computing so as to produce a mesh being comprised of a plurality of small partitions on a projecting plane of said virtual camera;
means for setting projecting mesh, for setting a projecting mesh by projecting said mesh produced on said projecting plane by said means for producing mesh onto a position of said surface of said big surface object in said three dimensional virtual space, said position being shown by said object data;
means for partially modeling, for partially modeling said surface of said big surface object on each small partition comprising said projecting mesh;
means for rendering, for rendering said surface of said big surface object which was partially modeled by said means for partially modeling so as to compute and produce an image of said surface on said projecting plane; and
means for displaying, for displaying said image of said surface which was computed and produced by said means for rendering on said monitor.
